# FASCICULE DE BREVET EUROPEEN

(11) **EP 0 591 067 B1**
(45) Date de publication et mention de la délivrance du brevet: **10.07.1996**
(21) Numéro de dépôt: 93402416.7
(22) Date de dépôt: 01.10.1993
(51) Int. Cl.: B60H 1/03, B60H 1/00, B60K 11/02

(54) **Dispositif de ventilation et de refroidissement du moteur électrique d'un véhicule**
Vorrichtung zur Belüftung und zur Kühlung des Elektromotors eines Fahrzeuges
Device for the ventilation and the cooling of an electric motor of a vehicle

(30) Priorité: 02.10.1992 FR 9211681
(43) Date de publication de la demande: 06.04.1994
(73) Titulaire: Valeo Climatisation, 78321 La Verrière (FR)
(72) Inventeur: Dauvergne, Jean, F-95470 Fosses (FR)
(74) Mandataire: Gamonal, Didier

(56) Documents cités:
- EP-A- 0 467 751
- EP-A- 0 497 639
- EP-A- 0 504 653
- DE-U- 9 202 466

## Description

L'invention concerne un dispositif pour le refroidissement du moteur de traction et/ou de propulsion et pour le chauffage et/ou la ventilation, ou la climatisation, de l'habitacle d'un véhicule, comprenant un radiateur de refroidissement du moteur et de chauffage de l'habitacle et un pulseur principal pour produire un courant d'air de ventilation provenant de l'habitacle et/ou de l'extérieur, ainsi qu'un organe de réglage d'entrée d'air permettant de faire varier de 0 à 100% un premier rapport entre le débit d'air prélevé à l'extérieur du véhicule et le débit total produit par le pulseur principal, et un organe de mixage permettant de faire varier de 0 à 100% un second rapport représentant la fraction de débit d'air venant au contact d'une source de chaleur, par rapport au débit d'air envoyé dans l'habitacle.

De tels dispositifs sont utilisés en particulier dans des véhicules à traction électrique (connus par exemple par EP-A-0 504 653), la source de chaleur comprenant une source auxiliaire, par exemple électrique, qui est mise en service lorsque la chaleur dégagée par le moteur électrique de traction et ses équipements annexes n'est pas suffisante pour assurer le chauffage de l'habitacle.

Le but de l'invention est de permettre, en l'absence de besoins de chauffage de l'habitacle, le refroidissement du moteur de traction sans aucune influence sur le circuit de ventilation ou de climatisation de l'habitacle.

L'invention vise notamment un dispositif du genre défini en introduction, dans lequel:
a) l'organe de réglage d'entrée d'air est placé en amont du pulseur principal,
b) ladite source de chaleur comprend le radiateur de refroidissement, et
c) le radiateur de refroidissement est disposé dans une branche secondaire de circuit d'air, placée en dérivation sur une branche principale, et en série avec le pulseur principal, la branche secondaire contenant également un pulseur auxiliaire et étant reliée directement à l'extérieur de l'habitacle par une entrée et une sortie d'air situées respectivement en amont et en aval du radiateur de refroidissement et du pulseur auxiliaire, l'organe de mixage comprenant un organe de mixage amont et un organe de mixage aval pouvant se déplacer chacun entre une première position dans laquelle il obture la jonction correspondante entre les branches principale et secondaire et une seconde-position dans laquelle il obture l'entrée d'air extérieur ou la sortie d'air extérieur de la branche secondaire.

D'autres caractéristiques, complémentaires ou alternatives, du dispositif selon l'invention sont énoncées ci-après :
- Il comprend une source auxiliaire de chaleur pouvant être mise en service lorsque le débit calorifique transmis du radiateur de refroidissement à l'air est insuffisant pour le chauffage de l'habitacle.
- Ladite branche principale comprend deux sous-branches en parallèle dont une première contient la source auxiliaire, ces deux sous-branches étant disposées en série avec le pulseur, des moyens étant prévus pour faire varier la fraction du débit d'air passant dans la première sous-branche par rapport au débit total dans les deux sous-branches.
- La source auxiliaire est un radiateur électrique.
- Les organes de mixage amont et aval sont commandés conjointement de façon à se déplacer simultanément entre leur première position et leur seconde position.

D'autres caractéristiques et avantages de l'invention apparaîtront à l'examen de la description détaillée ci-après, et des dessins annexés, sur lesquels :
- la figure 1 est une vue de dessus schématique d'un véhicule automobile à traction électrique montrant la configuration et l'implantation du circuit d'air d'un dispositif selon l'invention ; et
- les figures 2 et 3 sont des vues en coupe de ce circuit respectivement selon les lignes II-II et III-III de la figure 1.

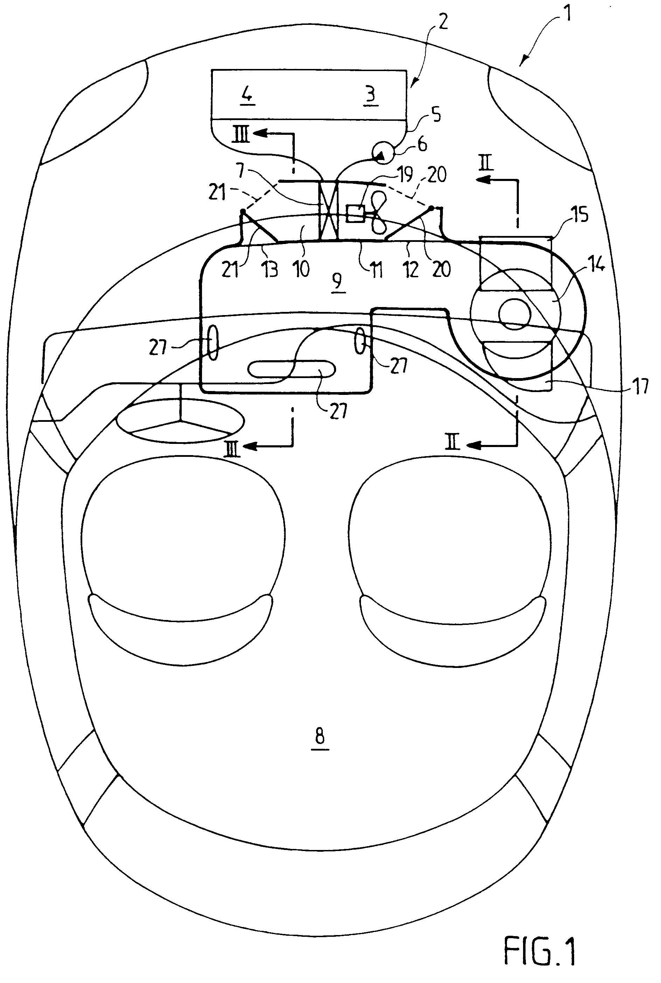

Le véhicule 1 illustré à la figure 1 est équipé d'une chaîne de traction 2 composée d'un moteur électrique 3 et d'un régulateur de puissance 4. Environ 5% de la puissance consommée par la chaîne 2 sont dissipés sous forme de chaleur par le moteur 3, et environ 10% par le régulateur 4. Ces pertes thermiques sont évacuées par une boucle d'eau chaude 5 munie d'une pompe de circulation 6 et d'un radiateur 7.

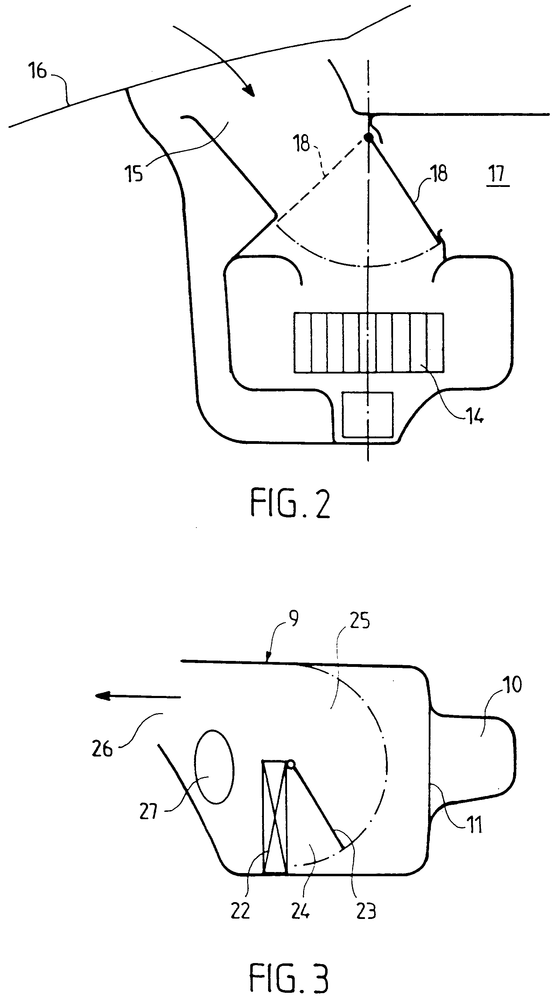

Le circuit de chauffage et de ventilation de l'habitacle 8 du véhicule comprend une branche principale 9 et une branche secondaire 10 en dérivation sur celle-ci, séparées l'une de l'autre par une cloison 11 et communiquant entre elles par deux ouvertures 12 et 13 situées respectivement en amont et en aval de la cloison par rapport au sens de circulation de l'air dans la branche 9. La branche 9 contient, en amont de l'ouverture 12, un pulseur 14 destiné à produire un courant d'air de chauffage ou de ventilation de l'habitacle. En amont du pulseur 14, la branche 9 communique avec l'extérieur de l'habitacle par une entrée d'air extérieur 15 disposée sous le capot 16 (figure 2) du véhicule, et avec l'intérieur de l'habitacle par une entrée d'air de recirculation 17. Un volet de recirculation 18 peut pivoter entre une première position, indiquée en trait plein à la figure 2, dans laquelle il obture l'entrée 17, et une seconde position, indiquée en trait interrompu, dans laquelle il obture l'entrée 15, permettant ainsi de régler de façon continue la fraction d'air recirculé dans le débit d'air produit par le pulseur.

Le radiateur de refroidissement 7 est disposé dans la branche secondaire 10, en série avec un pulseur auxiliaire 19. Un volet de mixage amont 20 et un volet de mixage aval 21 peuvent être déplacés conjointement entre une première position, représentée en trait plein à la figure 1, où ils obturent respectivement les ouvertures 12 et 13, et une seconde position, représentée en trait interrompu, où ils obturent respectivement une entrée et une sortie faisant communiquer directement la branche 10 avec l'extérieur de l'habitacle.

Dans la branche 9, en aval de l'ouverture de communication 13, est disposé un radiateur auxiliaire 22 utilisé pour produire un complément de chaleur lorsque le débit calorifique dégagé par la chaîne de traction et recueilli dans le radiateur 7 n'est pas suffisant pour satisfaire les besoins de chauffage de l'habitacle. Ce radiateur auxiliaire est associé à un volet de mixage auxiliaire 23 qui délimite de façon connue, à l'intérieur de la branche 9, deux sous-branches en parallèle 24 et 25 de sections complémentaires variables. Lorsque ce volet pivote, la fraction du débit d'air circulant dans la branche 9 qui vient en contact avec le radiateur 22 varie de 0 à 100%. En aval des sous-branches 24 et 25, la branche 9 communique avec l'intérieur de l'habitacle par des ouvertures de sortie 26 vers le tableau de bord, des ouvertures de sortie 27 vers le bas de l'habitacle et des ouvertures de sortie non représentées à la base du pare-brise.

Lorsqu'on souhaite utiliser, pour le chauffage de l'habitacle, la totalité de la chaleur dégagée par le radiateur 7, on règle les volets de mixage 20 et 21 de façon à libérer entièrement les ouvertures de communication 12 et 13 et à obturer les entrée et sortie directes de la branche 10. Si nécessaire, un débit calorifique complémentaire est obtenu en mettant en service le radiateur auxiliaire 22 et en réglant dans la position convenable le volet de mixage auxiliaire 23.

Si l'habitacle n'a pas besoin d'être chauffé, on positionne les volets 20 et 21 de façon à obturer les ouvertures 12 et 13. La branche 10 constitue alors un circuit d'air de refroidissement du moteur de traction entièrement indépendant du circuit de ventilation de l'habitacle. Les éléments de ce dernier circuit peuvent donc être réglés en fonction des seuls besoins de ventilation, sans être tributaires de la fonction de refroidissement du moteur.

Enfin, lorsque le débit de chaleur nécessaire pour le chauffage de l'habitacle est supérieur à 0 mais inférieur au débit produit par le radiateur 7, on place les volets 20 et 21 dans des positions intermédiaires, produisant ainsi une communication partielle entre les branches 9 et 10.

Le pulseur auxiliaire 19 assure un débit d'air suffisant à travers le radiateur 7, quelles que soient les positions des volets de mixage 20 et 21.

Le dispositif décrit peut être adapté à la climatisation du véhicule, un évaporateur de fluide réfrigérant étant placé dans la branche principale 9 du circuit d'air.

## Revendications

1. Dispositif pour le refroidissement du moteur de traction et/ou de propulsion (3) et pour le chauffage et/ou la ventilation, ou la climatisation, de l'habitacle (8) d'un véhicule, comprenant un radiateur (7) de refroidissement du moteur et de chauffage de l'habitacle et un pulseur principal (14) pour produire un courant d'air de ventilation provenant de l'habitacle et/ou de l'extérieur, ainsi qu'un organe de réglage d'entrée d'air (18) permettant de faire varier de 0 à 100% un premier rapport entre le débit d'air prélevé à l'extérieur du véhicule et le débit total produit par le pulseur principal, et un organe de mixage (20,21) permettant de faire varier de 0 à 100% un second rapport représentant la fraction de débit d'air venant au contact d'une source de chaleur (7), par rapport au débit d'air envoyé dans l'habitacle, caractérisé en ce que :
a) l'organe de réglage d'entrée d'air (18) est placé en amont du pulseur principal (14),
b) ladite source de chaleur comprend le radiateur de refroidissement (7), et
c) le radiateur de refroidissement est disposé dans une branche secondaire (10) de circuit d'air, placée en dérivation sur une branche principale (9) et en série avec le pulseur principal, la branche secondaire contenant également un pulseur auxiliaire (19) et étant reliée directement à l'extérieur de l'habitacle par une entrée et une sortie d'air situées respectivement en amont et en aval du radiateur de refroidissement et du pulseur auxiliaire, l'organe de mixage comprenant un organe de mixage amont (20) et un organe de mixage aval (21) pouvant se déplacer chacun entre une première position dans laquelle il obture la jonction correspondante (12,13) entre les branches principale et secondaire et une seconde position dans laquelle il obture l'entrée d'air extérieur ou la sortie d'air extérieur de la branche secondaire.

2. Dispositif selon la revendication 1, caractérisé en ce qu'il comprend une source auxiliaire de chaleur (22) pouvant être mise en service lorsque le débit calorifique transmis du radiateur de refroidissement à l'air est insuffisant pour le chauffage de l'habitacle.

3. Dispositif selon la revendication 2, caractérisé en ce que ladite branche principale comprend deux sous-branches en parallèle (24,25) dont une première (24) contient la source auxiliaire (22), ces deux sous-branches étant disposées en série avec le pulseur, des moyens (23) étant prévus pour faire varier la fraction du débit d'air passant dans la première sous-branche par rapport au débit total dans les deux sous-branches.

4. Dispositif selon l'une des revendications 2 et 3, caractérisé en ce que la source auxiliaire est un radiateur électrique.

5. Dispositif selon l'une des revendications précédentes, caractérisé en ce que les organes de mixage amont (20) et aval (21) sont commandés conjointement de façon à se déplacer simultanément entre leur première position et leur seconde position.

## Claims

1. Apparatus for cooling the traction and/or propulsion motor (3), and for the heating and/or ventilation, or air conditioning, of the cabin (8) of a vehicle, comprising a radiator (7) for cooling the motor and for heating the cabin, and a main blower (14) for producing a stream of ventilating air drawn from the cabin and/or from outside, together with an air inlet regulating member (18), for varying between 0 and 100% a first ratio between the air flow drawn from outside the vehicle and the total air flow produced by the main blower, and a mixing member (20, 21) for varying from 0 to 100% a second ratio representing the fraction of air flow coming into contact with a heat source (7) with respect to the air flow delivered into the cabin, characterised in that:
(a) the air inlet regulating member (18) is placed upstream of the main blower (14),
(b) the said heat source comprises the cooling radiator (7), and
(c) the cooling radiator is disposed in a secondary branch (10) of the air circuit, branched from a main branch (9) and in series with the main blower, with the secondary branch further containing an auxiliary blower (19) and being connected directly outside the cabin through an air inlet and an air outlet situated respectively upstream and downstream of the cooling radiator and auxiliary blower, the mixing member comprising an upstream mixing member (20) and a downstream mixing member (21), each of which is displaceable between a first position in which it obturates the corresponding junction (12, 13) between the main and secondary branches, and a second position in which it obturates the external air inlet or the external air outlet of the secondary branch.

2. Apparatus according to Claim 1, characterised in that it includes an auxiliary heat source (22) which is able to be brought into use when the heat flow transmitted from the cooling radiator to the air is insufficient for heating the cabin.

3. Apparatus according to Claim 2, characterised in that the said main branch comprises two sub-branches (24, 25) in parallel, a first sub-branch (24) of which contains the auxiliary heat source (22), the two said sub-branches being disposed in series with the blower, with means (23) being provided for causing the fraction of the air flow passing into the first sub-branch to be varied with respect to the total air flow in both sub-branches.

4. Apparatus according to Claim 2 or Claim 3, characterised in that the auxiliary source is an electric radiator.

5. Apparatus according to one of the preceding Claims, characterised in that the upstream mixing member (20) and the downstream mixing member (21) are controlled together in such a way as to be displaced simultaneously between their first position and their second position.

## Patentansprüche

1. Vorrichtung zur Kühlung des Fahr- und/oder Antriebsmotors (3) und zur Heizung und/oder Belüftung oder Klimatisierung des Fahrgastraums (8) eines Fahrzeugs mit einem Kühler (7) zur Kühlung des Motors und zur Heizung des Fahrgastraums und einem Hauptgebläse (14) zur Erzeugung eines aus dem Fahrgastraum und/oder von draußen kommenden Belüftungsluftstroms sowie mit einem Regelorgan für den Lufteinlaß (18), mit dem ein erstes Verhältnis zwischen dem außerhalb des Fahrzeugs aufgenommenen Luftdurchsatz und dem durch das Hauptgebläse erzeugten Gesamtluftdurchsatz von 0 bis 100% verändert werden kann, und einem Mischorgan (20, 21), mit dem ein zweites Verhältnis, das dem mit einer Wärmequelle (7) in Kontakt kommenden Teilluftdurchsatz, bezogen auf den in den Fahrgastraum eingeleiteten Luftdurchsatz, entspricht, von 0 bis 100% verändert werden kann , **dadurch gekennzeichnet,** daß:
a) das Regelorgan für den Lufteinlaß (18) vor dem Hauptgebläse (14) angeordnet ist,
b) die besagte Wärmequelle den Kühler (7) umfaßt und
c) der Kühler in einem Nebenstrang (10) des Luftkreislaufs angebracht ist, der in Abzweigung an einem Hauptstrang (9) und hintereinander mit dem Hauptgebläse angeordnet ist, wobei der Nebenstrang außerdem ein Hilfsgebläse (19) enthält und direkt mit dem Außenbereich des Fahrgastraums durch einen Lufteinlaß und einen Luftauslaß verbunden ist, die sich vor bzw. hinter dem Kühler und dem Hilfsgebläse befinden, wobei das Mischorgan aus einem vorgeordneten Mischorgan (20) und einem nachgeordneten Mischorgan (21) besteht, die jeweils zwischen einer ersten Position mit Verschluß der entsprechenden Verbindung (12, 13) zwischen Haupt- und Nebenstrang und einer zweiten Position mit Verschluß des Außenlufteinlasses oder des Außenluftauslasses des Nebenstrangs verstellt werden können.

2. Vorrichtung nach Anspruch 1 , **dadurch gekennzeichnet**, daß sie eine Hilfswärmequelle (22) umfaßt, die eingeschaltet werden kann, wenn der vom Kühler an die Luft übertragene Wärmedurchsatz für die Heizung des Fahrgastraums nicht ausreicht.

3. Vorrichtung nach Anspruch 2 , **dadurch gekennzeichnet**, daß der besagte Hauptstrang zwei parallele Teilstränge (24, 25) umfaßt, von denen ein erster (24) die Hilfswärmequelle (22) enthält, wobei diese beiden Teilstränge hintereinander mit dem Gebläse angeordnet sind und wobei Mittel (23) vorgesehen sind, um den durch den ersten Teilstrang strömenden Teilluftdurchsatz im Verhältnis zum Gesamtluftdurchsatz in den beiden Teilsträngen zu verändern.

4. Vorrichtung nach einem der Ansprüche 2 und 3, **dadurch gekennzeichnet**, daß die Hilfswärmequelle ein elektrischer Radiator ist.

5. Vorrichtung nach einem der vorangehenden Ansprüche, **dadurch gekennzeichnet**, daß die vorgeordneten (20) und nachgeordneten Mischorgane (21) gemeinsam betätigt werden, so daß sie sich gleichzeitig zwischen ihrer ersten Position und ihrer zweiten Position verstellen.
